# EUROPÄISCHE PATENTSCHRIFT

(11) **EP 3 529 672 B1**
(45) Veröffentlichungstag und Bekanntmachung des Hinweises auf die Patenterteilung: **03.11.2021**
(21) Anmeldenummer: 17778203.4
(22) Anmeldetag: 15.09.2017
(51) Int. Cl.: G05B 19/042

(54) **VERFAHREN, KOMMUNIKATIONSMODUL UND SYSTEM ZUR ÜBERMITTLUNG VON DIAGNOSEDATEN EINES FELDGERÄTS IN EINER ANLAGE DER PROZESSAUTOMATISIERUNG**
METHOD, COMMUNICATION MODULE AND SYSTEM FOR TRANSMITTING DIAGNOSIS DATA OF A FIELD DEVICE IN AN INSTALLATION FOR PROCESS AUTOMATION
PROCÉDÉ, MODULE DE COMMUNICATION ET SYSTÈME DE TRANSMISSION DE DONNÉES DE DIAGNOSTIC D'UN APPAREIL DE TERRAIN DANS UNE INSTALLATION D'AUTOMATISATION DE PROCESSUS

(30) Priorität: 21.10.2016 DE 102016120108
(43) Veröffentlichungstag der Anmeldung: 28.08.2019
(73) Patentinhaber: Endress+Hauser Process Solutions AG, 4153 Reinach (CH)
(72) Erfinder: FIEDLER, Marc, 4153 Reinach (CH); DE GROOT, Vincent, 68300 St. Louis (FR)
(74) Vertreter: Andres, Angelika Maria
(86) Internationale Anmeldenummer: PCT/EP2017/073229
(87) Internationale Veröffentlichungsnummer: WO 2018/072939

(56) Entgegenhaltungen:
- WO-A1-2012/021484
- US-B1- 9 197 143

## Beschreibung

Die Erfindung betrifft ein Verfahren und ein Kommunikationsmodul zur Übermittlung von Diagnosedaten eines Feldgeräts in einer Anlage der Prozessautomatisierung. Des Weiteren betrifft die Erfindung ein System zur Übermittlung von Diagnosedaten von einer Vielzahl von Feldgeräten in einer Anlage der Prozessautomatisierung.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Anwendungen des Leitstands (Siemens PCS7, ABB Symphony, Emerson Delta V) integriert sind.

In vielen älteren Anlagen kommunizieren die Feldgeräte mit den übergeordneten Einheiten jedoch häufig noch mittels der 4-20 mA-Technologie. Hierzu sind die Feldgeräte als Zweidraht-Feldgeräte ausgelegt und mittels einer Kommunikationsschleife mit den übergeordneten Einheiten verbunden. Die Größe der von den Feldgeräten ermittelten Prozesswerte wird über variierende, zur aktuellen Größe der Prozesswerte korrespondierende, Stromwerte im Bereich von 4 bis 20 mA an die übergeordneten Einheiten übermittelt.

Viele dieser Feldgeräte besitzen die Möglichkeit, über das HART-Protokoll parametriert zu werden, indem auf den Gleichstrom ein digitales Signal mittels eines FSK(Frequency Shift Keying)-Modems aufmoduliert wird. Häufig wird diese Technologie jedoch lediglich zur Parametrierung der Feldgeräte mittels einer, insbesondere mobilen, Bedieneinheit verwendet, während das Auslesen von weiteren Informationen, beispielsweise Diagnosedaten, mittels den übergeordneten Einheiten nicht möglich ist, obwohl die Feldgeräte selbst diese Möglichkeit besitzen.

Ein Nachrüsten der Anlage mit Zusatzkomponenten, welche eine digitale Kommunikation mit den Feldgeräten ermöglichen, ist neben den für den Erwerb der Zusatzkomponenten entstehenden Kosten auch mit hohem Aufwand hinsichtlich der Installation dieser Zusatzkomponenten verbunden. Zum liegt dies daran, dass die elektrische und/oder mechanische Installation aufgrund des begrenzten Installationsraumes an den Messstellen sehr aufwändig ist. Zum anderen müssten Anlagenprozesse gestoppt werden, da die Kommunikationsschleifen zur elektrischen Installation der Zusatzkomponenten geöffnet werden müssen.

Ein weiteres Problem besteht in der Notwendigkeit der Energieversorgung dieser Zusatzkomponenten. Da die von der jeweiligen Kommunikationsschleife zur Verfügung stehende Energie häufig nicht ausreicht, um auch die Zusatzkomponenten zu versorgen, ohne dass dabei die Kommunikation und/oder die Messgenauigkeit beeinträchtigt wird, ist eine zusätzliche Stromversorgung nötig. Eine Batterieversorgung der Zusatzkomponenten ist mit Nachteilen verbunden, da die Batterie je nach Energiebedarf der jeweiligen Zusatzkomponente mehr oder weniger häufig gewechselt werden muss, was bei einer großen Anzahl zu wechselnder Batterien einen hohen Aufwand darstellt und insbesondere in Ex-Bedingungen aufgrund der Gefahr eines Funkenschlags nicht ohne weiteres möglich ist.

Die WO 2012/021484 A1 umfasst ein Feldgerät mit einem Drahtlosadapter zum Erheben von Prozessinformationen. Der Drahtlosadapter wird über einen Schleifenstrom mit elektrischer Energie versorgt.

Die US 9,197,143 B1 beschreibt verschiedene Methoden zum Gewinnen von elektrischer Energie mittels Energy Harvesting für drahtlose Sensorsysteme.

Ausgehend von dieser Problematik liegt der Erfindung liegt die Aufgabe zugrunde, ein Verfahren, ein Kommunikationsmodul und ein System vorzustellen, welches es erlaubt, eine existierende Anlage der Prozessautomatisierung mit geringem Installationsaufwand nachzurüsten, um Diagnosedaten aus sich in der Anlage befindlichen Feldgeräten zu gewinnen.

Die Aufgabe wird durch ein Verfahren gemäß Patentanspruch 1 gelöst.

Der große Vorteil der Erfindung besteht darin, dass Diagnosedaten auf einfach Art und Weise aus dem Feldgerät abgefragt werden und an zentraler Stelle zur Verfügung stehen. Dadurch, dass das die Diagnosedaten auslesende Kommunikationsmodul seine zum Abfragen und Übermitteln benötigte Energie aus nicht für die Messung benötigten Anteilen des Stromsignals oder via Energy Harvesting gewinnt, ist keine separate Energieversorgung notwendig. Der analoge Messwert und dessen Genauigkeit wird hierbei nicht beeinflusst. Lediglich die Empfangseinheit, welche beispielsweise ein Gateway oder ein Router ist, muss separat mit Strom versorgt werden.

Bei der Kommunikationsschleife handelt es sich vorzugsweise um eine 4-20 mA-Stromschleife. Der Kommunikationsbefehl, welcher von dem Kommunikationsmodul an das Feldgerät gesendet wird, erfolgt über das HART-Protokoll. Hierfür wird der Kommunikationsbefehl mittels Frequency-Shift-Keying (FSK) als Strommodulation übermittelt. Das Feldgerät selbst sendet die gewünschten Diagnosedaten dann mittels eines HART-Kommunikationspulses an das Kommunikationsmodul zurück. Vor der Inbetriebnahme muss das Kommunikationsmodul derart konfiguriert werden, dass es die Netzwerkadresse des Feldgeräts zum Abfragen der Diagnosedaten erhält.

Bei den Diagnosedaten handelt es sich insbesondere um Namur NE107-konforme Diagnosedaten oder um sonstige Diagnosedaten zur Überprüfung der Gerätefunktion oder des Kalibrierbedarfs eines Feldgeräts. Bei den Diagnosedaten kann es sich auch um Ereignisse handeln, welche eine konkrete Auswirkung auf das Feldgerät haben, beispielsweise Parametrierungsvorgänge oder das Über-, bzw. Unterschreiten von definierten Messschwellen.

Das drahtlose Übermitteln der abgefragten Diagnosedaten an die Empfangseinheit kann mittels jedes gebräuchlichen Drahtlosprotokolls erfolgen. Beispiele für Drahtlosprotokolle sind Bluetooth, Zigbee, Wifi, aber auch drahtlose Feldbusprotokolle wie WirelessHART. Insbesondere von Vorteil ist es, wenn das drahtlose Übermitteln nur eine geringe Energiemenge benötigt, weshalb sich vorzugsweise low-power Kurzstrecken-Funktechniken wie Bluetooth LE als Übertragungstechnik eignen.

Die an die Empfangseinheit übermittelten Diagnosedaten werden in dieser gespeichert und können mittels eines Bedientools, beispielsweise einem Handheld oder einem mobilen Endgerät, wie einem Smartphone oder einem Tablet, aus der Empfangseinheit ausgelesen werden. Das Auslesen der in der Empfangseinheit gespeicherten Diagnosedaten erfolgt hierbei über eine drahtgebundene Kommunikationsverbindung oder alternativ über eine drahtlose Kommunikationsverbindung, wie beispielsweise Wifi, Bluetooth oder Zigbee.

Feldgeräte, welche im Zusammenhang mit der Erfindung erwähnt werden, sind im einleitenden Teil der Beschreibung beispielhaft beschrieben.

Eine bevorzugte Ausgestaltung des erfindungsgemäßen Verfahrens sieht vor, dass die Empfangseinheit die übermittelten Diagnosedaten dem Leitstand der Anlage zur Verfügung stellt. Dadurch stehen die abgefragten, an die Empfangseinheit übermittelten Diagnosedaten aller Feldgeräte nicht nur an der Empfangseinheit selbst zur Verfügung, sondern können außerdem in dem Leitstand visualisiert/und oder weiterverarbeitet werden. Die Verbindung der Empfangseinheit mit dem Leitstand erfolgt bevorzugt über dasselbe Netzwerk, mit dem die übergeordnete Einheit mit dem Leitstand verbunden ist, beispielsweise über Profibus PA oder Ethernet. Alternativ kann jedoch jede gebräuchliche drahtgebundene oder drahtlose Kommunikationsverbindung eingesetzt werden.

Gemäß einer vorteilhaften Weiterbildung des erfindungsgemäßen Verfahrens versieht die Empfangseinheit die Diagnosedaten mit Zusatzinformationen, insbesondere mit der Identifikation des Feldgeräts und/oder mit einem Zeitstempel. Die Diagnosedaten werden also bereits direkt von der Empfangseinheit aufbereitet, was eine einfache Zuordnung erlaubt.

Gemäß einer vorteilhaften Ausgestaltung des erfindungsgemäßen Verfahrens ist vorgesehen, dass der Schritt des drahtlosen Übermittelns der abgefragten Diagnosedaten an die Empfangseinheit nach jedem Abfragen der Diagnosedaten durch die Abfrageeinheit des Kommunikationsmoduls durchgeführt wird. Auf diese Art und Weise ist sichergestellt, dass die erhobenen Daten zeitnah der Empfangseinheit, und über diese dem Leitstand zur Verfügung stehen.

Gemäß einer weiteren vorteilhaften Ausgestaltung des erfindungsgemäßen Verfahrens ist vorgesehen, dass die abgefragten Diagnosedaten in dem Kommunikationsmodul zusammengefasst werden und die gesammelten Diagnosedaten zu festgelegten Zeitintervallen an die Empfangseinheit drahtlos übermittelt werden. Hierbei kann der Energieverbrauch der Kommunikationsmodule reduziert werden, da nicht jedem Abfragevorgang zwangsläufig ein Sendevorgang folgt. Außerdem lässt sich auf diese Art und Weise die Häufigkeit der Abfragevorgänge bei gleichbleibendem Energiebedarf der Kommunikationsmodule erhöhen.

Des Weiteren wird die Aufgabe durch ein Kommunikationsmodul gemäß Patentanspruch 6 gelöst.

Eine vorteilhafte Ausgestaltung des erfindungsgemäßen Kommunikationsmoduls sieht vor, dass das Kommunikationsmodul Klemmen oder Schneidklemmen aufweist, mittels denen das Kommunikationsmodul mit den Kabeln der Kommunikationsschleife verbunden ist, wobei beim Verbinden des Kommunikationsmoduls mit der Kommunikationsschleife die Kommunikationsschleife nicht unterbrochen wird. Die Installation des Kommunikationsmoduls kann somit auf einfache Art und Weise bewerkstelligt werden. Da zur Installation des Kommunikationsmoduls die Kommunikationsschleife nicht unterbrochen wird, kann der herkömmliche Betrieb der Anlage selbst während dem Zeitraum der Installation fortgesetzt werden.

Gemäß einer bevorzugten Weiterbildung des erfindungsgemäßen Kommunikationsmoduls ist vorgesehen, dass die Energiespeichereinheit durch einen Kondensator, insbesondere durch einen Doppelschicht-Kondensator oder durch einen Superkondensator, oder durch einen Akku gebildet ist.

Es ist vorgesehen, dass die Wandlereinheit durch zumindest eine Gleichrichterschaltung, insbesondere durch einen Dioden-, Detektor-, Halb- oder Vollgleichrichter, gebildet ist, die mit der Kommunikationsschleife verbunden ist. Auch jede weitere Schaltungsform eines Gleichrichters ist zum Einsatz in dem Kommunikationsmodul geeignet.

Gemäß einer vorteilhaften Ausgestaltung des erfindungsgemäßen Kommunikationsmoduls ist vorgesehen, dass sich die Sendeeinheit in dem Gehäuse des Kommunikationsmoduls befindet.

Gemäß einer vorteilhaften Weiterbildung des erfindungsgemäßen Kommunikationsmoduls besitzt die Sendeeinheit ein separates Gehäuse und steht insbesondere über eine Schnittstelle mit dem Kommunikationsmodul in Verbindung. Herstellungstechnisch lassen sich hierbei Kosten sparen, da bereits auf dem Markt erhältliche Sendeeinheiten, wie beispielsweise Bluetooth-, Wifi-, oder ähnliche Funkmodule verwendet werden können, wodurch lediglich die übrigen Komponenten des Kommunikationsmoduls gefertigt werden müssen.

Des Weiteren wird die Aufgabe durch ein System gemäß Patentanspruch 12 gelöst.

Oftmals laufen die Kabel der einzelnen Kommunikationsschleifen in einem Schaltschrank zusammen, in welchem sich die übergeordnete Einheit befindet. Es kann daher vorgesehen sein, die einzelnen Kommunikationsmodule für eine effiziente Nutzung im Schaltschrank an die jeweiligen Kommunikationsschleifen anzuschließen, wobei die Empfangseinheit ebenfalls im Schaltschrank platziert wird. Es ist dadurch möglich, viele der Kommunikationsmodule räumlich nah an der Empfangseinheit zu platzieren. Dadurch, dass jedes einzelne Kommunikationsmodul seine Energie autark gewinnt und nur die Empfangseinheit mit Strom versorgt werden muss

In einer vorteilhaften Weiterbildung des erfindungsgemäßen Systems ist die Empfangseinheit dazu ausgestaltet, mit dem Leitstand über ein drahtloses oder drahtgebundenes Netzwerk in Kommunikationsverbindung zu stehen und die übermittelten Diagnosedaten dem Leitstand über das Netzwerk zur Verfügung zu stellen. Dadurch stehen die abgefragten, an die Empfangseinheit übermittelten Diagnosedaten aller Feldgeräte nicht nur an der Empfangseinheit selbst zur Verfügung, sondern können außerdem in dem Leitstand visualisiert/und oder weiterverarbeitet werden.

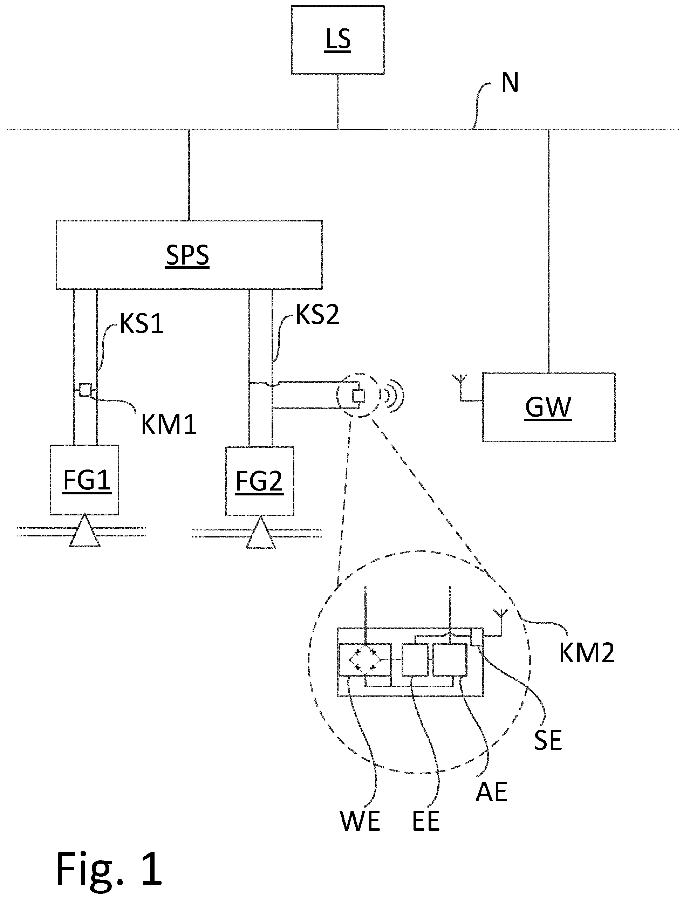

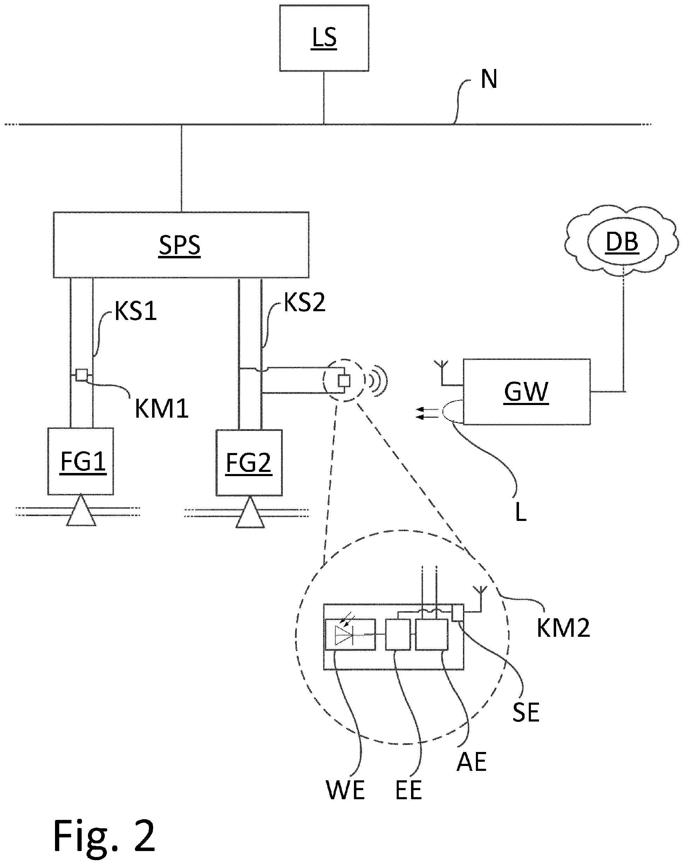

Die Erfindung wird anhand der nachfolgenden Figuren näher erläutert. Es zeigt
Fig. 1: eine Ausgestaltung des erfindungsgemäßen Systems zur Übermittlung von Diagnosedaten von einer Vielzahl von Feldgeräten in einer Anlage der Prozessautomatisierung.

Fig. 1 zeigt eine Ausgestaltung des erfindungsgemäßen Systems zur Übermittlung von Diagnosedaten von einer Vielzahl von Feldgeräten FG1, FG2 in einer Anlage der Prozessautomatisierung. In der Anlage befinden sich zwei Feldgeräte FG1, FG2. Beispielsweise handelt es sich bei diesen Feldgeräten FG1, FG2 um Durchflussmessgeräte. Es kann sich hierbei jedoch um beliebige Feldgeräte, wie sie in dem einleitenden Teil der Beschreibung beispielshaft genannt sind, sowie um eine beliebige Anzahl dieser Feldgeräte FG1, FG2 handeln.

Die Feldgeräte FG1, FG2 sind jeweils mittels einer Kommunikationsschleife KS1, KS2 mit einer übergeordneten Einheit SPS verbunden. Bei dieser übergeordneten Einheit SPS handelt es sich insbesondere um eine SPS oder um einen PLC. Bei den Kommunikationsschleifen KS1, KS2 handelt es sich um jeweils eine 4-20 mA-Stromschleife, mittels welcher die jeweiligen gemessenen Prozesswerte der Feldgeräte FG1, FG2 an die übergeordnete Einheit SPS übermittelt werden.

Die übergeordnete Einheit SPS selbst ist über ein Netzwerk N, bspw. Ethernet oder Profibus DP, mit der Leitstelle LS der Anlage verbunden.

Um Diagnosedaten aus den Feldgeräten FG1, FG2 auszulesen, wird jeweils ein Kommunikationsmodul KM1, KM2 auf die Kabel der jeweiligen Kommunikationsschleife KS1, KS2 gesteckt. Bevorzugter Weise werden die Kommunikationsmodule KS1, KS2 im Schaltschrank auf die Kabel der Kommunikationsschleifen KS1, KS2 gesteckt, insbesondere an der Stelle, an welcher die Kabel der Kommunikationsschleifen KS1, KS2 zu der übergeordneten Einheit SPS zusammengeführt sind.

Die Kommunikationsmodule KM1, KM2 werden mittels Schneidklemmen derart an den Kabeln der Kommunikationsschleifen KS1, KS2 befestigt, dass die Kommunikationsmodule KM1, KM2 parallel zu dem jeweils korrespondierenden Feldgerät FG1, FG2 geschaltet sind, was den Vorteil bringt, dass die Kommunikationsschleifen KS1, KS2 nicht aufgetrennt werden müssen.

Die Kommunikationsmodule KM1, KM2 umfassen eine Wandlereinheit WE, bestehend aus einer Gleichrichterschaltung, zur Erzeugung elektrischer Energie. Hierzu ist die übergeordnete Einheit SPS zum Erzeugen von diesen Kommunikationspulsen ausgestaltet. Bei den Kommunikationspulsen handelt es sich um einen Wechselstrom, bzw. um eine Wechselspannung, welche/r auf dem Gleichstrom der Kommunikationsschleifen KS1, KS2 aufmoduliert ist. Dieser Wechselstromanteil wird von der Wandlereinheit WE der Kommunikationsmodule KM1, KM2 abgegriffen. Durch die Gleichrichterschaltung in der Wandlereinheit WE wird der aufmodulierte Wechselstromanteil gleichgerichtet, an eine der Wandereineinheit WE nachgeschaltete Energiespeichereinheit EE weitergeleitet und in der Energiespeichereinheit EE gespeichert.

Es kann dabei vorgesehen sein, dass der Kommunikationspuls ein HART-Befehl ist. Die übergeordnete Einheit SPS ist dann derart ausgestaltet, dass diese in regelmäßigen Zeitabständen den HART-Befehl aussendet. Der HART-Befehl selbst ist dabei ohne Belang für das Feldgerät FG1, FG2 und enthält beispielsweise einen für das Feldgerät FG1, FG2 ungültigen Befehl oder eine andere Empfangsadresse als die Netzwerkadresse des Feldgeräts FG1, FG2.

Die Menge der in der Energiespeichereinheit EE gespeicherten elektrischen Energie wird detektiert. Sobald ein vorbestimmter Grenzwert, welcher durch den Benutzer einstellbar ist, in einem der Kommunikationsmodule erreicht wird, sendet eine in dem Kommunikationsmodul KM1, KM2 befindliche Abfrageeinheit AE einen Kommunikationsbefehl an das entsprechende Feldgerät FG1, FG2 zur Abfragen aktueller Diagnosedaten des Feldgeräts FG1, FG2.

Der Kommunikationsbefehl, welcher von dem Kommunikationsmodul KM1, KM2 an das Feldgerät FG1, FG2 gesendet wird, erfolgt auf HART-Basis. Hierfür wird der Kommunikationsbefehl auf den aktuellen Stromwert der 4-20 mA-Stromschleife aufmoduliert. Im Gegensatz zur übergeordneten Einheit SPS muss das Feldgerät HART-tauglich sein, um den Kommunikationsbefehl zu "verstehen".

Das Feldgerät FG1, FG2 selbst sendet die gewünschten Diagnosedaten mittels eines HART-Kommunikationspulses an das Kommunikationsmodul KM1, KM2 zurück. Vor der Inbetriebnahme muss das Kommunikationsmodul KM1, KM2jedoch derart konfiguriert werden, dass es die Netzwerkadresse des Feldgeräts zum Abfragen der Diagnosedaten weiß.

Nachdem das Kommunikationsmodul KM1, KM2 die Diagnosedaten des Feldgeräts FG1, FG2 empfangen hat, reichert es diese mit Zusatzinformationen, wie einem Zeitstempel und der Identifikation des Feldgeräts FG1, FG2 an. Anschließend werden die Diagnosedaten drahtlos an eine Empfangseinheit GW unter Verbrauch elektrischer Energie aus der Energiespeichereinheit EE mittels einer Sendeeinheit SE übermittelt, woraufhin die Empfangseinheit GW die Diagnoseinformationen speichert.

Alternativ zum Erreichen eines Grenzwerts wird das Abfragen, bzw. Senden der abgefragten Diagnosedaten durch einen Befehl ausgelöst wird, bspw. durch einen Tastendruck am Gehäuse des jeweiligen Kommunikationsmoduls KM1, KM2.

Die gespeicherten Diagnoseinformationen können dann mittels eines PCs, einer mobilen Bedieneinheit oder eines mobilen Endgerätes mittels einer drahtgebundenen oder einer drahtlosen Kommunikationsverbindung aus der Empfangseinheit GW ausgelesen werden. Alternativ ist die Empfangseinheit GW mit der Leitstelle LS der Anlage verbunden und stellt die gespeicherten Diagnoseinformationen der Leitstelle zur Verfügung.

Es versteht sich von selbst, dass das erfindungsgemäße Verfahren und das erfindungsgemäße System auf jegliche Art und Anzahl von Feldgeräten FG anwendbar ist und nicht auf das in Fig. 1 gezeigte Ausführungsbeispiel beschränkt ist.

## Patentansprüche

1. Verfahren zur Übermittlung von Diagnosedaten eines Feldgeräts (FG1, FG2) in einer Anlage der Prozessautomatisierung, wobei das Feldgerät (FG1, FG2) über eine Kommunikationsschleife (KS1, KS2) mit einer übergeordneten Einheit (SPS) in Kommunikationsverbindung steht, wobei die Kommunikationsschleife (KS1, KS2) einen Versorgungs-/Messstrom mit einem Gleichanteil aufweist, und wobei ein Kommunikationsmodul (KM1, KM2) derart mit der Kommunikationsschleife (KS1, KS2) verbunden ist, dass das Kommunikationsmodul (KM1, KM2) parallel zum Feldgerät (FG1, FG2) geschaltet ist, umfassend:
- Erzeugen von Kommunikationspulsen mittels der übergeordneten Einheit (SPS), welche Kommunikationspulse als Wechselstrom oder als Wechselspannung auf den Gleichanteil der Kommunikationsschleife (KS1, KS2) aufmoduliert werden, wobei die Kommunikationspulse HART-Befehle sind, welche einen für das Feldgerät (FG1, FG2) ungültigen Befehl oder eine andere Empfangsadresse als die Netzwerkadresse des Feldgeräts (FG1, FG2) enthalten;
- kontinuierliches Speichern von elektrischer Energie in einer Energiespeichereinheit (EE) des Kommunikationsmoduls mittels einer der Energiespeichereinheit (EE) vorgeschalteten Wandlereinheit (WE) bis zu einem vorbestimmten Grenzwert, wobei die Wandlereinheit (WE) die Kommunikationspulse in elektrische Energie umwandelt;
- Abfragen der Diagnosedaten des Feldgeräts (FG1, FG2) durch einen Kommunikationsbefehl mittels einer Abfrageeinheit (AE) des Kommunikationsmoduls (KM1, KM2)
- Empfangen der Diagnosedaten des Feldgeräts (FG1, FG2) mittels eines durch das Feldgerät gesendeten Kommunikationsbefehls durch das Kommunikationsmoduls (KM1, KM2) und drahtloses Übermitteln der abgefragten Diagnosedaten an eine Empfangseinheit (GW) mittels einer Sendeeinheit (SE) des Kommunikationsmoduls (KM1, KM2), sobald die in der Energiespeichereinheit (EE) gespeicherte elektrische Energie den vorbestimmten Grenzwert erreicht, bzw. überschritten hat und/oder wenn das Kommunikationsmodul (KM1, KM2) einen Befehl zum Abfragen bzw. Übermitteln erhält.

2. Verfahren nach Anspruch 1, wobei die Empfangseinheit (GW) die übermittelten Diagnosedaten dem Leitstand (LS) der Anlage zur Verfügung stellt.

3. Verfahren nach zumindest einem der vorherigen Ansprüche, wobei die Empfangseinheit (GW) die Diagnosedaten mit Zusatzinformationen, insbesondere mit der Identifikation des Feldgeräts (FG1, FG2) und/oder mit einem Zeitstempel, versieht.

4. Verfahren nach zumindest einem der vorherigen Ansprüche, wobei der Schritt des drahtlosen Übermittelns der abgefragten Diagnosedaten an die Empfangseinheit (GW) nach jedem Abfragen der Diagnosedaten durch das Kommunikationsmodul (KM1, KM2) durchgeführt wird.

5. Verfahren nach zumindest einem der Ansprüche 1 bis 3, wobei die abgefragten Diagnosedaten in dem Kommunikationsmodul (KM1, KM2) zusammengefasst werden und die gesammelten Diagnosedaten zu festgelegten Zeitintervallen an die Empfangseinheit (GW) drahtlos übermittelt werden.

6. Kommunikationsmodul (KM1, KM2), ausgestaltet zur Verwendung in einem Verfahren nach zumindest einem der Ansprüche 1 bis 5, umfassend:
- eine Energiespeichereinheit (EE) mit einer vorgeschalteten Wandlereinheit (WE), wobei die Wandlereinheit (WE) dazu ausgestaltet ist, HART-Befehle, die einen für ein mit dem Kommunikationsmodul verbindbares Feldgerät (FG1, FG2) ungültigen Befehl oder eine andere Empfangsadresse als die Netzwerkadresse des verbindbaren Feldgeräts (FG1, FG2) enthalten, in elektrische Energie umzuwandeln, und wobei die Energiespeichereinheit (EE) dazu ausgestaltet ist, die umgewandelte elektrische Energie zu speichern;
- eine Abfrageeinheit (AE) zum Abfragen von Diagnosedaten des verbindbaren Feldgeräts (FG1, FG2); und
- eine Sendeeinheit (SE) zum drahtlosen Übermitteln der abgefragten Diagnosedaten an die Kommunikationseinheit (GW).

7. Kommunikationsmodul (KM1, KM2) nach Anspruch 6, wobei das Kommunikationsmodul (KM1, KM2) Klemmen oder Schneidklemmen aufweist, mittels denen das Kommunikationsmodul (KM1, KM2) mit den Kabeln der Kommunikationsschleife (KS1, KS2) verbindbar ist, wobei beim Verbinden des Kommunikationsmoduls (KM1, KM2) mit der Kommunikationsschleife (KS1, KS2) die Kommunikationsschleife (KS1, KS2) nicht unterbrochen ist.

8. Kommunikationsmodul (KM1, KM2) nach zumindest einem der Ansprüche 6 oder 7, wobei die Energiespeichereinheit (EE) durch einen Kondensator, insbesondere durch einen Doppelschicht-Kondensator oder durch einen Superkondensator, oder durch einen Akku gebildet ist.

9. Kommunikationsmodul (KM1, KM2) nach zumindest einem der Ansprüche 6 bis 8, wobei die Wandlereinheit (WE) durch zumindest eine Gleichrichterschaltung, insbesondere durch einen Dioden-, Detektor-, Halb- oder Vollgleichrichter, gebildet ist, die mit der Kommunikationsschleife (KS1, KS2) verbindbar ist.

10. Kommunikationsmodul (KM1, KM2) nach zumindest einem der Ansprüche 6 bis 9, wobei sich die Sendeeinheit (SE) in dem Gehäuse des Kommunikationsmoduls (KM1, KM2) befindet.

11. Kommunikationsmodul (KM1, KM2) nach zumindest einem der Ansprüche 6 bis 9, wobei die Sendeeinheit (SE) ein separates Gehäuse besitzt dazu ausgestaltet ist, insbesondere über eine Schnittstelle mit dem Kommunikationsmodul (KM1, KM2) in Verbindung zu stehen.

12. System zur Übermittlung von Diagnosedaten von einer Vielzahl von Feldgeräten (FG1, FG2), umfassend:
- eine übergeordnete Einheit (SPS), welche mittels jeweils einer separaten Kommunikationsschleife (KS1, KS2) mit den einzelnen Feldgeräten (FG1, FG2) in Kommunikationsverbindung steht, wobei die Kommunikationsschleifen (KS1, KS2) jeweils einen Versorgungs-/Messstrom mit einem Gleichanteil aufweisen, und wobei die übergeordnete Einheit (SPS) dazu ausgestaltet ist, Kommunikationspulse zu erzeugen, welche Kommunikationspulse als Wechselstrom oder als Wechselspannung auf dem Gleichanteil der Kommunikationsschleifen (KS1, KS2) aufmoduliert werden, wobei die Kommunikationspulse HART-Befehle sind, welche einen für das jeweilige Feldgerät (FG1, FG2) ungültigen Befehl oder eine andere Empfangsadresse als die Netzwerkadresse des jeweiligen Feldgeräts (FG1, FG2) enthalten;
- eine Vielzahl von Kommunikationsmodulen (KM1, KM2), welche jeweils derart an den einzelnen Kommunikationsschleifen (KS1, KS2) angeschlossen sind, dass die Kommunikationsmodule (KM1, KM2) jeweils parallel zu dem entsprechenden Feldgerät (FG1, FG2) geschaltet sind, und welche jeweils zumindest eine Energiespeichereinheit (EE), eine Abfrageeinheit (AE) und eine Sendeeinheit (SE) aufweisen, wobei die Energiespeichereinheit (EE) dazu ausgestaltet ist, elektrische Energie zu sammeln, indem eine der Energiespeichereinheit (EE) vorgeschaltete Wandlereinheit (WE) dazu ausgestaltet ist, die Kommunikationspulse in elektrische Energie umzuwandeln;
- eine Empfangseinheit (GW), wobei jedes Kommunikationsmodul (KM1, KM2 dazu ausgestaltet ist, Diagnosedaten aus den jeweiligen Feldgeräten (FG1, FG2) durch die Abfrageeinheit (AE) abzufragen, und die abgefragten Diagnosedaten über eine drahtlose Funkverbindung an die Empfangseinheit (GW) mittels der Sendeeinheit (SE) zu übermitteln, sobald in der Energiespeichereinheit (EE) des Kommunikationsmoduls (KM1, KM2) ein vorbestimmter Grenzwert an gespeicherter Energie erreicht ist oder wenn das Kommunikationsmodul (KM1, KM2) einen Befehl zum Abfragen bzw. Übermitteln erhält.

13. System nach Anspruch 12, wobei die Empfangseinheit (EE) dazu ausgestaltet ist, mit dem Leitstand (LS) der Anlage über ein drahtloses oder drahtgebundenes Netzwerk in Kommunikationsverbindung zu stehen und die übermittelten Diagnosedaten dem Leitsystem über das Netzwerk zur Verfügung zu stellen.

## Claims

1. Procedure for transmitting diagnostic data of a field device (FG1, FG2) in a process automation system, wherein the field device (FG1, FG2) is in communication with a higher-level unit (SPS) via a communication loop (KS1, KS2), wherein the communication loop (KS1, KS2) has a power supply/measuring current with a direct current component, and wherein a communication module (KM1, KM2) is connected to the communication loop (KS1, KS2) in such a way that the communication module (KM1, KM2) is switched in parallel with the field device (FG1, FG2), wherein said procedure comprises the following steps:
- Generation of communication pulses by means of the higher-level unit (SPS), wherein said communication pulses are modulated onto the direct current component of the communication loop (KS1, KS2) as alternating current or as alternating voltage, wherein the communication pulses are HART commands, wherein said commands contain an invalid command for the field device (FG1, FG2) or a reception address that is different to the network address of the field device (FG1, FG2);
- Continuous storage of electrical energy in an energy storage unit (EE) of the communication module by means of a converter unit (WE) connected upstream from the energy storage unit (EE) up to a predefined limit value, wherein the converter unit (WE) converts the communication pulses into electrical energy;
- Interrogation of the diagnostic data of the field device (FG1, FG2) by a communication command by means of an interrogation unit (AE) of the communication module (KM1, KM2) ;
- Receipt of the diagnostic data of the field device (FG1, FG2) by the communication module (KM1, KM2) by means of a communication command sent by the field device and wireless transmission of the interrogated diagnostic data to a receiver unit (GW) by means of a transmission unit (SE) of the communication module (KM1, KM2) as soon as the electrical energy accumulated in the energy storage unit (EE) reaches or has exceeded the predefined limit value and/or if the communication module (KM1, KM2) receives a command to interrogate or transmit data.

2. Procedure as claimed in Claim 1, wherein the receiver unit (GW) makes the transmitted diagnostic data available to the control station (LS) of the system.

3. Procedure as claimed in at least one of the previous claims, wherein the receiver unit (GW) provides the diagnostic data with supplementary information, particularly with the identification of the field device (FG1, FG2) and/or with a time stamp.

4. Procedure as claimed in at least one of the previous claims, wherein the step involving the wireless transmission of the interrogated diagnostic data to the receiver unit (GW) is performed after every interrogation of the diagnostic data by the communication module (KM1, KM2).

5. Procedure as claimed in at least one of the Claims 1 to 3, wherein the interrogated diagnostic data are collected in the communication module (KM1, KM2) and the collected diagnostic data are transmitted wirelessly to the receiver unit (GW) at set intervals.

6. Communication module (KM1, KM2), which is designed to be used in a procedure as claimed in at least one of the Claims 1 to 5, and comprises:
- an energy storage unit (EE) with an upstream converter unit (WE), wherein the converter unit (EE) is configured to convert HART commands containing an invalid command for a field device (FG1, FG2) that can be connected to the communication module or a reception address different to the network address of the connectable field device (FG1, FG2) into electrical energy, and wherein the energy storage unit (EE) is designed to store the converted electrical energy;
- an interrogation unit (AE) to interrogate the diagnostic data of the connectable field device (FG1, FG2); and
- a transmission unit (SE) to wirelessly transmit interrogated diagnostic data to the communication unit (GW).

7. Communication module (KM1, KM2) as claimed in Claim 6, wherein the communication module (KM1, KM2) comprises clamps or IDC contacts by means of which the communication module (KM1, KM2) can be connected to the cables of the communication loop (KS1, KS2), wherein the communication loop (KS1, KS2) is not interrupted when the communication module (KM1, KM2) is connected to the communication loop (KS1, KS2).

8. Communication module (KM1, KM2) as claimed in at least one of the Claims 6 or 7, wherein the energy storage unit (EE) is formed by a capacitor, particularly by a double-layer capacitor or by a supercapacitor, or by an accumulator battery.

9. Communication module (KM1, KM2) as claimed in at least one of the Claims 6 to 8, wherein the converter unit (WE) is formed by at least a rectifier circuit, particularly by a diode rectifier, detector rectifier, semi-rectifier or full rectifier, which can be connected to the communication loop (KS1, KS2).

10. Communication module (KM 1, KM2) as claimed in at least one of the Claims 6 to 9, wherein the transmission unit (SE) is located in the housing of the communication module (KM1, KM2).

11. Communication module (KM1, KM2) as claimed in at least one of the Claims 6 to 9, wherein the transmission unit (SE) has a separate housing and is designed to be connected to the communication module (KM1, KM2), particularly via an interface.

12. System designed to transmit diagnostic data from multiple field devices (FG1, FG2), said system comprising:
- a higher-level unit (SPS), which communicates with the various field devices (FG1, FG2) by means of a separate communication loop (KS1, KS2), wherein the communication loops (KS1, KS2) each have a power supply/measuring current with a direct current component, and wherein the higher-level unit (SPS) is designed to generate communication pulses, wherein said communication pulses are modulated onto the direct current component of the communication loops (KS1, KS2) as alternating current or as alternating voltage, wherein the communication pulses are HART commands that contain an invalid command for the respective field device (FG1, FG2) or a reception address that is different to the network address of the respective field device (FG1, FG2);
- multiple communication modules (KM1, KM2), wherein said modules are connected to the individual communication loops (KS1, KS2) in such a way that the communication modules (KM1, KM2) are switched in parallel to the respective field device (FG1, FG2), and wherein the modules each comprise at least an energy storage unit (EE), an interrogation unit (AE) and a transmission unit (SE), wherein the energy storage unit (EE) is designed to store the electrical energy, wherein a converter unit (WE) is connected upstream from the energy storage unit (EE) and is designed to convert the communication pulses into electrical energy;
- a receiver unit (GW), wherein each communication module (KM1, KM2) is designed to interrogate diagnostic data from the respective field devices (FG1, FG2) using the interrogation unit (AE), and to wirelessly transmit the interrogated diagnostic data to the receiver unit (GW) by means of the transmission unit (SE) as soon as a predetermined limit value of stored energy is reached in the energy storage unit (EE) of the communication module (KM1, KM2) or if the communication module (KM1, KM2) receives a command to interrogate or transmit data.

13. System as claimed in Claim 12, wherein the receiver unit (EE) is designed to communicate with the control station (LS) of the system via a wireless or wired network and to make the transmitted diagnostic data available to the command system via the network.

## Revendications

1. Procédé destiné à la transmission des données de diagnostic d'un appareil de terrain (FG1, FG2) dans une installation d'automatisation de process, l'appareil de terrain (FG1, FG2) étant en communication avec une unité de niveau supérieur (SPS) via une boucle de communication (KS1, KS2), la boucle de communication (KS1, KS2) présentant un courant d'alimentation / de mesure avec une composante de courant continu, et un module de communication (KM1, KM2) étant relié à la boucle de communication (KS1, KS2) de telle sorte que le module de communication (KM1, KM2) est couplé en parallèle avec l'appareil de terrain (FG1, FG2), lequel procédé comprend les étapes suivantes :
- Génération d'impulsions de communication au moyen de l'unité de niveau supérieur (SPS), lesquelles impulsions de communication sont modulées en tant que courant alternatif ou en tant que tension alternative sur la composante de courant continu de la boucle de communication (KS1, KS2), les impulsions de communication étant des commandes HART, lesquelles commandes contiennent une commande non valide pour l'appareil de terrain (FG1, FG2) ou une adresse de réception différente de l'adresse de réseau de l'appareil de terrain (FG1, FG2) ;
- Accumulation continue d'énergie électrique dans une unité d'accumulation d'énergie (EE) du module de communication au moyen d'une unité de conversion (WE) couplée en amont de l'unité d'accumulation d'énergie (EE) jusqu'à une valeur limite prédéfinie, l'unité de conversion (WE) convertissant les impulsions de communication en énergie électrique ;
- Interrogation des données de diagnostic de l'appareil de terrain (FG1, FG2) par une commande de communication au moyen d'une unité d'interrogation (AE) du module de communication (KM1, KM2) ;
- Réception des données de diagnostic de l'appareil de terrain (FG1, FG2) au moyen d'une commande de communication envoyée par l'appareil de terrain au moyen du module de communication (KM 1, KM2) et transmission sans fil des données de diagnostic interrogées à une unité de réception (GW) au moyen d'une unité d'émission (SE) du module de communication (KM1, KM2) dès que l'énergie électrique accumulée dans l'unité d'accumulation d'énergie (EE) atteint ou dépasse la valeur limite prédéfinie et/ou lorsque le module de communication (KM1, KM2) reçoit une commande d'interrogation ou de transmission.

2. Procédé selon la revendication 1, pour lequel l'unité de réception (GW) met les données de diagnostic transmises à la disposition du système numérique de contrôle commande (LS) de l'installation.

3. Procédé selon au moins l'une des revendications précédentes, pour lequel l'unité de réception (GW) fournit les données de diagnostic avec des informations supplémentaires, notamment avec l'identification de l'appareil de terrain (FG1, FG2) et/ou avec un horodatage.

4. Procédé selon au moins l'une des revendications précédentes, pour lequel l'étape de transmission sans fil des données de diagnostic interrogées à l'unité de réception (GW) est réalisée après chaque interrogation des données de diagnostic par le module de communication (KM1, KM2).

5. Procédé selon au moins l'une des revendications 1 à 3, pour lequel les données de diagnostic interrogées sont collectées dans le module de communication (KM1, KM2) et les données de diagnostic collectées sont transmises sans fil à l'unité de réception (GW) à intervalles de temps fixes.

6. Module de communication (KM1, KM2), lequel est conçu pour être utilisé dans un procédé selon au moins l'une des revendications 1 à 5, et comprenant :
- une unité d'accumulation d'énergie (EE) avec une unité de conversion en amont (WE), dans laquelle l'unité de conversion (EE) est configurée pour convertir les commandes HART contenant une commande non valide pour un appareil de terrain (FG1, FG2) pouvant être connecté au module de communication ou une adresse de réception différente de l'adresse de réseau de l'appareil de terrain pouvant être connecté (FG1, FG2) en énergie électrique, et dans laquelle l'unité d'accumulation d'énergie (EE) est configurée pour accumuler l'énergie électrique convertie ;
- une unité d'interrogation (AE) pour interroger les données de diagnostic de l'appareil de terrain connectable (FG1, FG2) ; et
- une unité de transmission (SE) pour transmettre sans fil les données de diagnostic interrogées à l'unité de communication (GW).

7. Module de communication (KM1, KM2) selon la revendication 6, le module de communication (KM1, KM2) comprenant des bornes ou des bornes guillotines au moyen desquelles le module de communication (KM1, KM2) peut être relié aux câbles de la boucle de communication (KS1, KS2), la boucle de communication (KS1, KS2) n'étant pas interrompue lorsque le module de communication (KM1, KM2) est relié à la boucle de communication (KS1, KS2).

8. Module de communication (KM 1, KM2) selon au moins l'une des revendications 6 ou 7, pour lequel l'unité d'accumulation d'énergie (EE) est formée par un condensateur, notamment par un condensateur double couche ou par un supercondensateur, ou par un accumulateur.

9. Module de communication (KM1, KM2) selon au moins l'une des revendications 6 à 8, pour lequel l'unité de conversion (WE) est formée par au moins un circuit redresseur, notamment par un redresseur à diodes, à demi-onde ou à pleine onde, qui peut être relié à la boucle de communication (KS1, KS2).

10. Module de communication (KM1, KM2) selon au moins l'une des revendications 6 à 9, pour lequel l'unité d'émission (SE) est située dans le boîtier du module de communication (KM1, KM2).

11. Module de communication (KM1, KM2) selon au moins l'une des revendications 6 à 9, pour lequel l'unité d'émission (SE) présente un boîtier séparé et est conçue pour être reliée au module de communication (KM1, KM2), notamment via une interface.

12. Système destiné à la transmission des données de diagnostic provenant d'une pluralité d'appareils de terrain (FG1, FG2), lequel système comprend :
- une unité de niveau supérieur (SPS), qui communique avec les différents appareils de terrain (FG1, FG2) par l'intermédiaire d'une boucle de communication (KS1, KS2) séparée, les boucles de communication (KS1, KS2) présentant chacune un courant d'alimentation / de mesure avec une composante de courant continu, et l'unité de niveau supérieur (SPS) étant conçue pour générer des impulsions de communication, lesquelles impulsions de communication sont modulées en tant que courant alternatif ou en tant que tension alternative sur la composante de courant continu des boucles de communication (KS1, KS2), lesdites impulsions de communication étant des commandes HART contenant une commande non valide pour l'appareil de terrain respectif (FG1, FG2) ou une adresse de réception différente de l'adresse de réseau de l'appareil de terrain respectif (FG1, FG2) ;
- une pluralité de modules de communication (KM1, KM2), lesquels modules sont respectivement reliés aux différentes boucles de communication (KS1, KS2) de telle sorte que les modules de communication (KM1, KM2) sont respectivement reliés en parallèle à l'appareil de terrain respectif (FG1, FG2), et lesquels modules comprennent chacun au moins une unité d'accumulation d'énergie (EE), une unité d'interrogation (AE) et une unité d'émission (SE), l'unité d'accumulation d'énergie (EE) étant conçue pour accumuler l'énergie électrique en ce qu'une unité de conversion (WE) connectée en amont de l'unité d'accumulation d'énergie (EE) est conçue pour convertir les impulsions de communication en énergie électrique ;
- une unité de réception (GW), chacun des modules de communication (KM1, KM2) étant conçu pour interroger les données de diagnostic à partir des appareils de terrain respectifs (FG1, FG2) par le biais de l'unité d'interrogation (AE), et pour transmettre les données de diagnostic interrogées via une liaison radio sans fil à l'unité de réception (GW) au moyen de l'unité d'émission (SE), dès qu'une valeur limite prédéterminée d'énergie accumulée est atteinte dans l'unité d'accumulation d'énergie (EE) du module de communication (KM1, KM2) ou lorsque le module de communication (KM1, KM2) reçoit une commande d'interrogation ou de transmission.

13. Système selon la revendication 12, pour lequel l'unité de réception (EE) est conçue pour être en communication avec le système numérique de contrôle commande (LS) de l'installation par l'intermédiaire d'un réseau sans fil ou filaire, et pour mettre les données de diagnostic transmises à la disposition du système de commande via le réseau.
